# EUROPEAN PATENT SPECIFICATION

(11) **EP 2 320 117 B1**
(45) Date of publication and mention of the grant of the patent: **07.03.2012**
(21) Application number: 09425448.9
(22) Date of filing: 06.11.2009
(51) Int. Cl.: F16L 37/084, F16L 37/46

(54) **Quick coupling for threaded male terminals or terminals having a similar connecting profile**
Schnellkupplung für Anschlusselemente mit Außengewinde oder Anschlusselemente mit einem ähnlichen Anschlussprofil
Couplage rapide de terminaux filetés mâles ou de terminaux doté d'un profil de connexion similaire

(43) Date of publication of application: 11.05.2011
(73) Proprietor: Faster S.P.A., 20124 Milano (IT)
(72) Inventor: Rambaldini, Mauro, 20063 Cernusco sul Naviglio (IT); Manfredi, Luca, 26027 Rivolta d'Adda (IT)
(74) Representative: Borsano, Corrado

(56) References cited:
- EP-A1- 1 353 108
- EP-A1- 1 876 381

## Description

The present invention concerns a coupling for threaded terminals or terminals having a similar connecting profile, adapted to allow the quick coupling, without needing screwing, of a receptacle onto a threaded male terminal to be coupled.

It is known that in many applications, e.g. for testing and inspecting apparatuses and machines at the end of the assembly lines, said apparatuses need to be connected to a pressurized fluid or air line. It is thus very important to reduce the times needed for the operator to carry out said functional tests or inspections, and in order to contribute to such a test time reduction, the operator must not waste time to manually connect and disconnect the couplings, operations which may also imply tightening by means of screwing and which therefore may even require the use of specific wrenches or tools in some cases. The time needed for the operator to carry out these operations has a very high impact in percentage on test duration, and therefore represent a limit to the line production.

It is therefore convenient to speed up and facilitate the actions which must be performed by the operator for connecting the line needed for testing; however, while speeding up these connecting operations, it is important to keep a high level of safety because the tests are often carried out by connecting a pressurized fluid line operating at very high pressure values, of the order of hundreds of atmospheres. A drawback which is found in the connection of machinery/equipment also relates to the high tolerance range of the threads. Given the high tolerance of threads and the multiple thread profiles, it is very difficult to make a coupling which, with minimum changes, may adapt to these couplings with a very wide tolerance so as to be able to use the same coupling for coupling several threaded terminals.

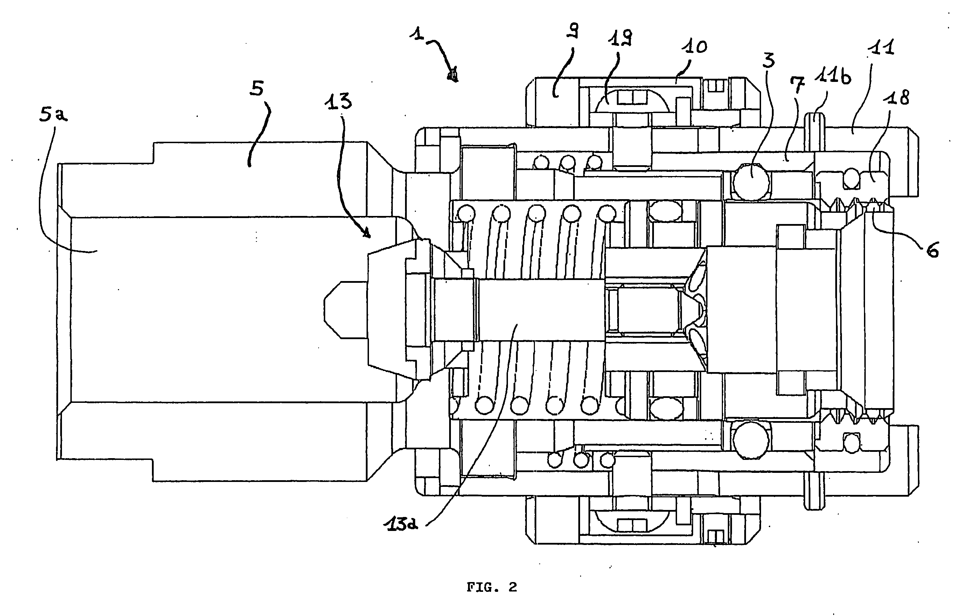

EP 1876381 A1 discloses an example of a quick coupling for threaded fittings of the type already known in the art. In particular, the quick coupling therein disclosed requires two movements in opposite directions in order to realize the connection, the user having to pull rearward the outer actuating ring nut while the connection is pushed against the male element. Therefore, the coupling described in EP 1876381 A1 requires that the user uses two hands in order to achieve the engagement of the male and female parts of the coupling. Additionally, in the coupling the flow-rate is subjected to right-angled deviations, as it can be seen on figure 2 of the application.

It is a main task of the present invention to either eliminate or reduce the drawbacks mentioned above.

Within the scope of this task, it is an object of the present invention to provide a quick coupling which allows to speed up and simplify the connecting operation to a threaded male terminal or terminal provided with similar coupling profile, allowing to connect the terminal without needing to carry out screwing operations, except for the case in which further accidental anti-release safety devices are required, and without needing the aid of special tools or equipments, the connection being manually executable.

A further object of the present invention is to provide a quick coupling which provides a high level of safety for the operator, and in particular which translates into the possibility of simply, immediately and visually verifying the coupling correctness, i.e. whether the coupling is correct or not.

A further, not last object of the present invention is to provide a quick coupling capable of being coupled to threaded terminals within a wide tolerance range, and further being coupled to threads having different profiles.

A further object of the present invention is to allow safe coupling even in case of high pressures.

This task and these and the other objects which will be more evident thereafter, are achieved by a quick coupling for connecting threaded male terminals or terminals having a similar connecting profile of the type comprising a main, substantially cylindrical, hollow body defining a main pipe therein having a substantially axial development, and gripping means provided at the end of said coupling and intended to accommodate said male terminal, characterized in that within said main body, it comprises at least one inner cylindrical hollow body coaxially arranged to said main body, axially movable and adapted to frontally match with said male terminal, and either outside or at the back of said main body at least one mechanism, in the form of hollow cylindrical ring nut or other, which is coaxial to said main body and slidable in the axial direction between a first position corresponding to the release of said gripping means from the male terminal and a second position in which said gripping means firmly hold said male terminal.

Further features and advantages of the present invention will be more apparent from the following detailed description provided by way of non-limitative example and shown in the accompanying drawings, in which:
figure 1 shows a perspective overview of the quick coupling according to the present invention;
figure 2 shows a section view with a longitudinal plane of the quick coupling according to the present invention;
figure 3 shows a perspective view of the same longitudinal section in figure 2;
figures 4, 5 and 6 show some steps of the coupling cycle of the device according to the present invention in longitudinal section, the coupling being axially symmetric to the longitudinal axis A-A;

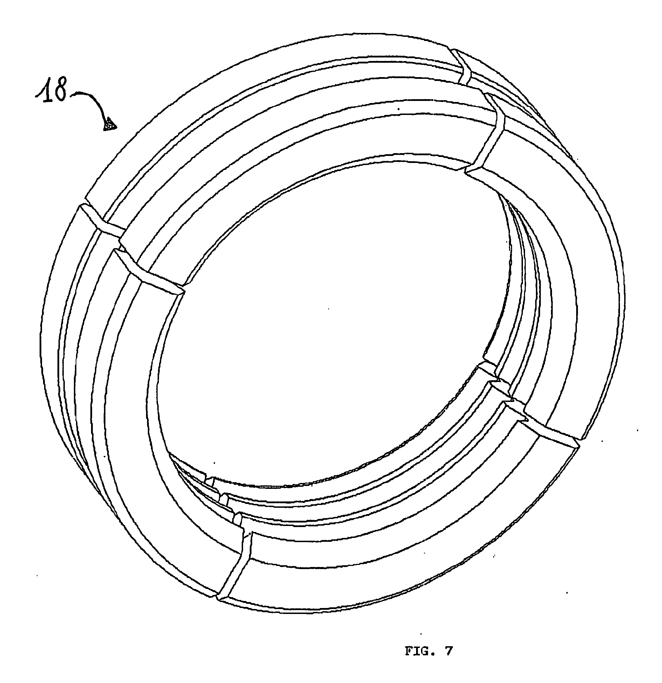

figure 7 shows a perspective view of the gripping means of the device according to the present invention;

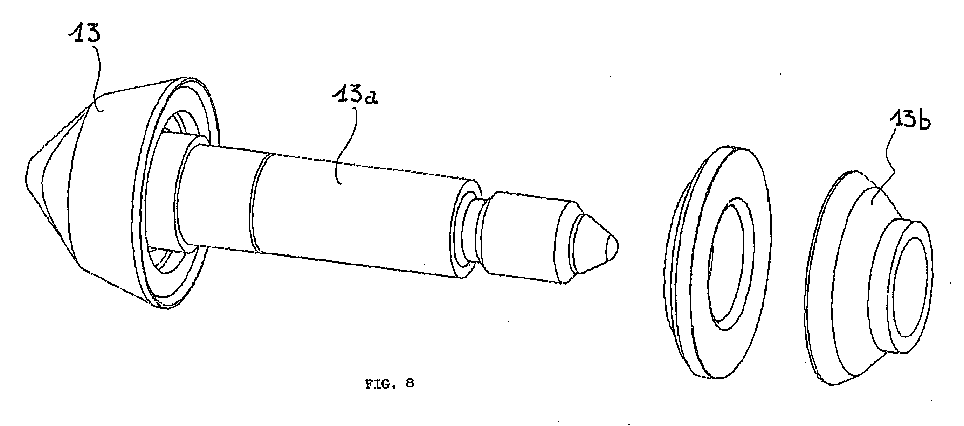

figure 8 shows an exploded view of a possible configuration of the fluid on-off valve of the device according to the present invention.

According to a preferred embodiment of the present invention shown in the mentioned figures by way of non limiting example, the quick coupling according to the present invention is generally indicated by reference numeral **1** and has two ends, a first end **1a** adapted to receive a threaded or shaped male terminal, generally indicated by letter **M** in figures from 4 to 6, and a second end 1 **b** adapted to be connected, for example to a pipe adapted to convey a pressurized fluid.

The coupling **1** according to the preferred embodiment shown here by way of example has a main body **5** having a substantially cylindrical structure, which thus is axially symmetric to the longitudinal axis **A** indicated in the figures. Axis **A** also identifies the symmetry axis of the main inner pipe **5a** which allows the pressurized fluid to pass through the coupling.

An outer body **11,** also hollow and cylindrical, fixed to the main body **5,** is externally associated with said main body **5.**

With particular reference to the accompanying figures, the coupling according to the present invention is externally very simple, so as to be easily handled by the operator in total safety, while internally it has a plurality of components adapted to interact with one another to ensure the functionality of the coupling.

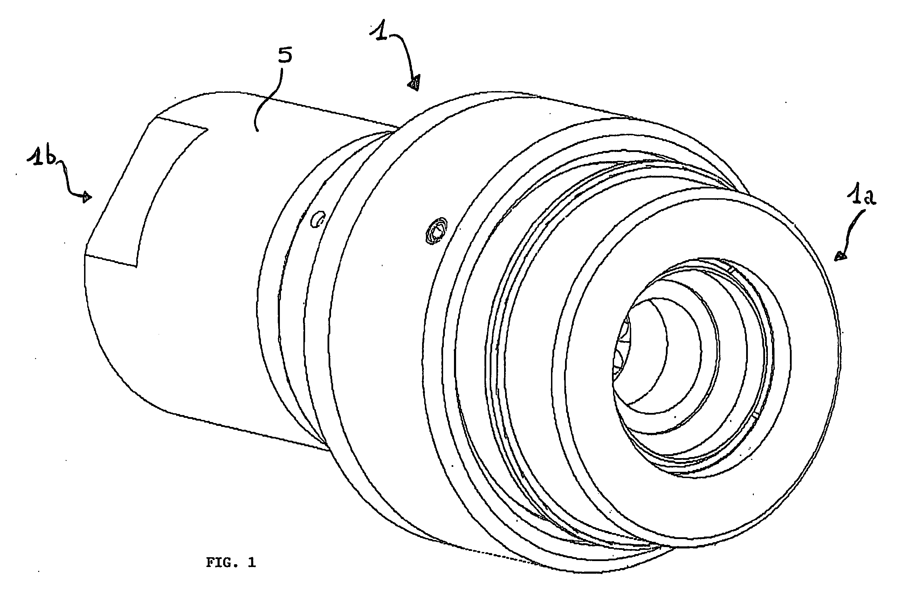

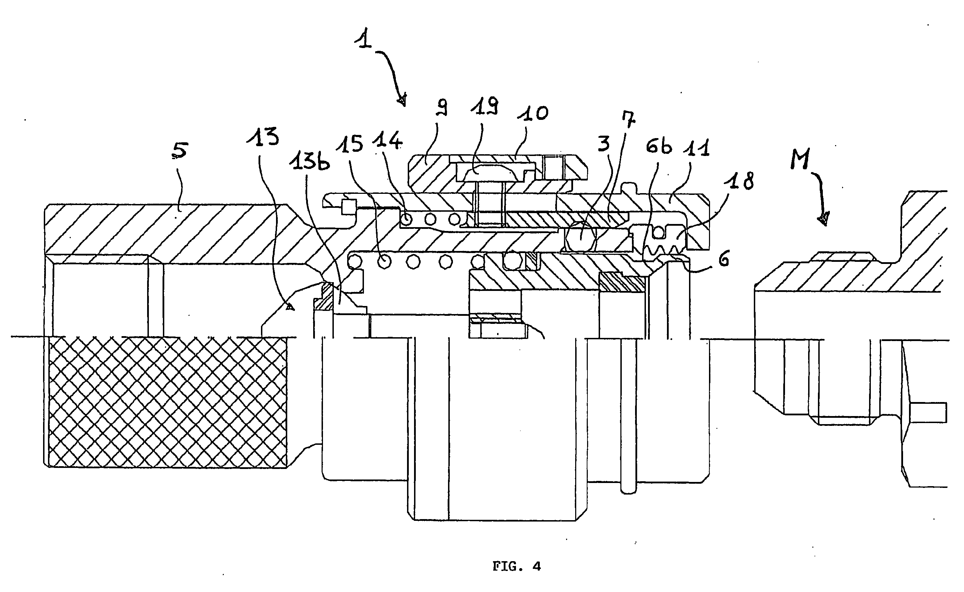

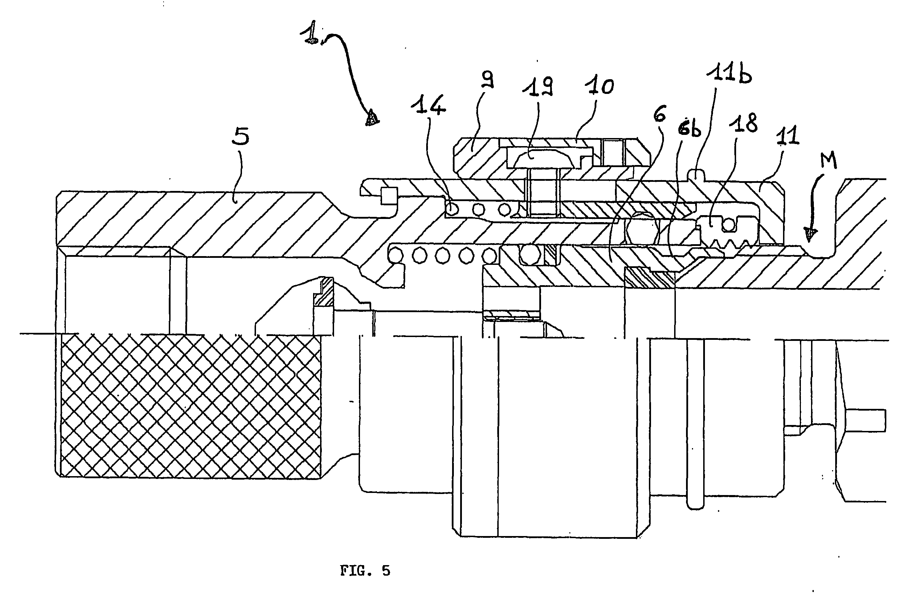

Coupling **1** according to the present invention will include an inner body **6,** visible from the sections of figures 4 - 6 and in the perspective view in Figure 1, within said main body **5** and slidingly associate therewith. The inner body **6** has a substantially cylindrical hollow structure and is arranged inside said main body **5** at the end **1a** adapted to receive the male terminal **M.** Said inner body **6** is slidingly associated with the main body **5,** an elastic element, preferably a helical spring **15,** acting between said main body **5** and said inner body **6** so as to bias the inner body towards the end **1a** of the coupling.

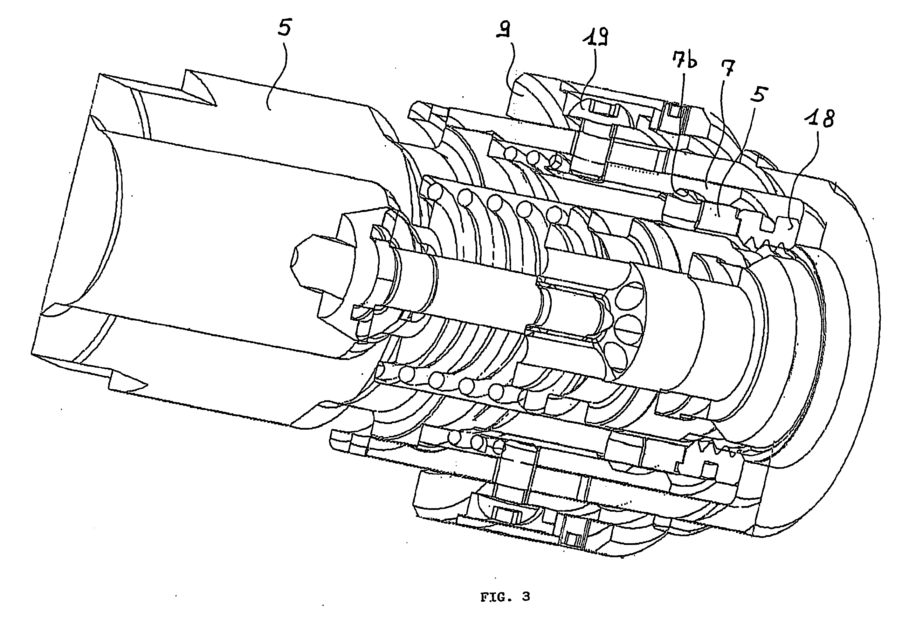

With particular reference to figure 3, it should be noted how the inner body **6** is integrally associated with the valve body **13.** The valve body **13** has a cylindrical body **13a** with a longitudinal development to which said inner body **6** is connected, and a fluid on-off body **13b** which is adapted to close the inner pipe **5a** by peripherally abutting on a stop element or section bottleneck provided on the inner surface of said pipe **5a.** The abutment of the on-off body **13a** in addition to close the pipe **5a,** defines the stroke-end position of said inner body **6.**

With particular reference to the longitudinal sections in figures from 4 to 6, said inner body **6** has a seat **6a** appropriately shaped to accommodate a main seal **20,** which advantageously consists of a substantially annular shaped sealing element, on an inner surface thereof at the end close to the end **1a** of the coupling. Said seal frontally abutting on terminal **M** ensures the hydraulic tightness of the coupling when it is coupled.

The coupling on the male terminal **M** determines the opening of the valve **13** and the consequent passage of fluid into the coupling, as illustrated in the following description, the inner shape of the hollow cylindrical body **6** allowing the fluid to pass with appropriate flow rates in both directions.

The end of the inner body **6** close to the end **1a** of the coupling is shaped so as to interact with gripping means **18** of said male terminal **M.** More in detail, the gripping means may advantageously comprise an annular element **18** divided into two or more sections, preferably into four sections. Said sections or jaws **18** have an inner surface either threaded or shaped to mate with the thread or shape of the threaded or shaped terminal **M.** The jaws **18** are kept in a normally expanded position by the presence of the inner body **6,** by resting on the outer surface of the end close to the end **1a** of the coupling, which allows to couple the male terminal **M** without generating interferences with the thread or shape of the terminal and the thread or shape of the jaws themselves. An elastic ring or o-ring **18a** may advantageously surround said jaws so as to bias them to close onto the threaded male terminal once they are no longer kept in the expanded position by the presence of the inner body **6.**

With particular reference to the longitudinal sections in figures 3, 4, 5 and 6, said inner body **6** has at least one groove **6b** on its outer surface adapted to accommodate one or more locking balls **3** circumferentially arranged between said inner body and a further hollow cylindrical element coaxial therewith, the slider **7** arranged between said inner body and said outer body **11** also being a hollow cylindrical element coaxially arranged to the main body and longitudinally movable with respect to the main body **5.** Said one or more locking balls **3** are placed inside an annular seat **5b** appropriately provided on said main body **5,** advantageously close to said coupling **1a.**

Said one or more locking balls **3** are either transversally or longitudinally secured to the seat while they are free to move in the radial direction.

When the coupling **1** is not coupled on a male terminal, said one or more locking balls **3** are in the position in figure **4****,** i.e. they occupy the groove **7a** provided on the inner surface of the slider **7.**

The slider **7** is secured to longitudinally slide due to the presence of connecting means with an outer element.

In the example shown by way of non limiting example, said connecting means consist, for example, of a pin or connecting screw **19** which connects said slider **7** to an outer ring nut **9** which is the outer element, also having a substantially cylindrical shape and being coaxially arranged to the main body of the coupling. The pin or connecting screw **19** may longitudinally slide within a longitudinal guide **11a** appropriately provided on the outer body **11.** A further upper ring nut indicated by reference numeral **10** in the accompanying figures may be advantageously placed for partially covering said lower outer ring nut **9.**

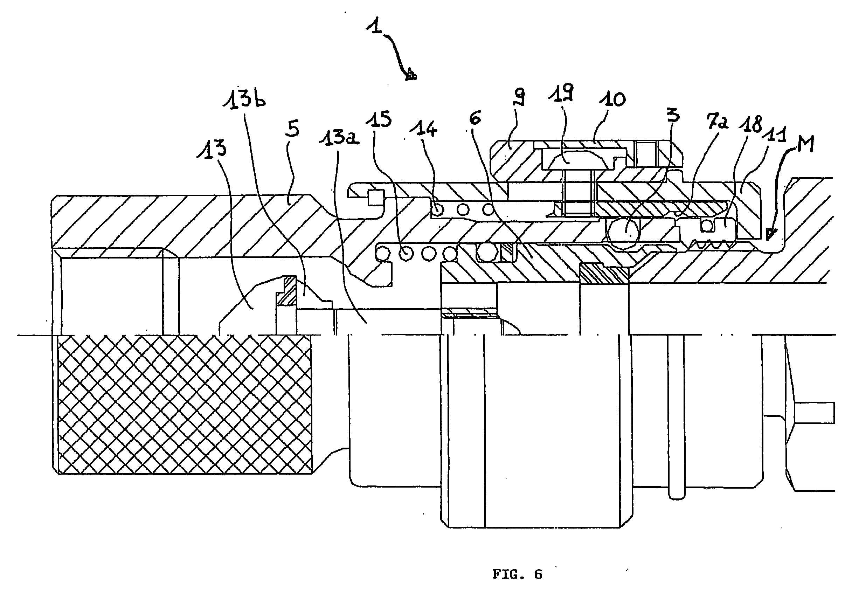

Said outer ring nut **9, 10** slides between a first position, retracted as seen in figure **4** and corresponding to the release of the gripping means **18** from the threaded terminal **M,** and a second advanced position seen in figure 6 and corresponding to the engagement of gripping means **18** on the threaded terminal **M.**

Said locking balls **3,** the seats **5b** in which they are obtained, the grooves **6b** and **7a** in which said balls are engaged, the slider **7** itself and the slider spring **14** define automatic means for gripping the terminal **M** because they allow to automatically snap the gripping jaws 18 on the terminal itself thus obtaining the grip upon the introduction of terminal **M** into the coupling and the retraction of the inner body **6.**

Alternative configurations of the quick coupling object of the present invention may be characterized in that the outer ring nut, instead of being mounted outside the body **11** and secured to the slider **7** by screws or pins, may be mounted at the back of body **11** in another suitable form, obviously always secured to the slider mechanism **7** which functionally performs the same task shown above.

The operation of the coupling according to the invention is as follows.

With particular reference to figure 4, when the coupling **1** is not coupled to a male terminal, the inner body **6** is in an advanced position towards the end **1a** of the coupling and keeps the jaws **18** in the expanded position, while the locking ball **3** inserted into the groove **7a** keeps the slider **7** in place, thus preventing the slider spring **14** acting between the slider **7** and the main body **5** from causing the advancement of the slider **7** towards the end **1a** of the coupling.

When the male terminal **M** is inserted into the coupling, the inner body **6** retracts with respect to the end **1a** of the coupling itself pushed by the terminal **M** and loads the spring of the inner body **15.** When the groove **6b** on the outer surface of the inner body **6** is at the iocking ball **3,** said ball falls into the groove **6b** thus releasing itself from the groove **7a** provided on the inner surface of the slider **7,** which is thus free to snap forward, towards the end **1a** of the coupling, biased by the spring **14,** thus drawing the ring nut **9, 10** or other alternative release mechanism.
The axial distance between the groove **6b** and the longitudinal position of the locking balls **3** determines the introduction stroke of the male terminal **M** needed to make the jaws **18** automatically snap for gripping.

At the same time, as the inner body retracts **6,** the jaws **18** are no longer kept in the expanded position by the presence of the inner body itself and are thus free to close by meshing on the male terminal **M.** The jaws **18** are biased to mesh on the terminal **M** by the end of the slider 7 during its advancement, and possibly by the presence of the o-ring **18a.**

The valve **13** is thus open and pressurized fluid may be introduced into the coupling when the terminal **M** is engaged with the coupling. The higher the working pressure, the higher the biasing action on the o-ring assembled at the back of the inner body, integral with the valve **13** and acting on the shaped front seal, a sealing interface with the male element **M.**

The jaws **18** are radially constrained by the presence of the slider **7** and for this reason cannot be physical released from the male thread **M.**

Furthermore, the jaws **18** fully encompass the male terminal **M** thus ensuring a high connection stability even under dynamic conditions of pressure and side loads. Again, a uniform distribution of the loads is so obtained on a wide circular gripping crown, avoiding detrimental load concentrations on the meshing threads which could induce deformations and ovalizations.

A chamfer **6c** is advantageously provided abutting the inner body **6,** which chamfer is able to raise the jaws **18** during the releasing step by radially moving them when the inner body **6** snaps forward again towards the end **1a,** thus facilitating the release of the jaws from the terminal **M.**

The coupling is engaged by the operator by simply pushing the coupling without needing further screwing. By virtue of the presence of an appropriate knurling on the outer surface of the main body 5, it may be easily gripped by the user who can grip the coupling and push the end **1a** thereof against the male terminal **M.** This simple movement rests the seal **20** at the front face of the male terminal **M** and the insertion of the terminal **M** into the coupling causes the inner body **6** to retract, the spring **15** to be compressed, and the valve **13** which is integral with the inner body **6** to be opened.

When the locking ball(s) **3** find the groove **6b** on the outer surface of the inner body **6,** the jaws **18** are free to fall, possibly assisted also by the presence of the o-ring **18a,** and at the same time the slider **7** snaps forward, i.e. towards the end **1a** of the coupling, which slider is fed by the outer releasing element as it is constrained to the latter, in this case formed by the lower **9** and upper **10** outer ring nuts. The outer ring nut **9, 10** advances until it abuts against a stop element **11 b** which radially protrudes outwards the surface of the outer body **11.** The slider **7,** as it travels being biased by the spring **14,** covers the jaws **18** thus ensuring their hold of the thread of terminal **M.**

As previously mentioned, alternative versions of the present invention may comprise an appropriately shaped element assembled at the back and firmly secured to the slider 7 instead of the ring nuts **9** and **10,** which element serves the same function described above as the ring nuts.

In order to disconnect, the pressure must be suppressed within the circuit because the disengagement is not possible when pressurized fluid is present inside the coupling, thus achieving a further safety feature.

After the pressure inside the circuit has been reset, the operator grips the releasing element, in this case formed by the ring nut **9, 10** and, keeping the main body **5** steady, it retracts the ring nut **9, 10** thereby retracting the slider **7** against the bias of the spring **14.** When the slider **7** frees the lock ball(s) **3** which may be placed in the groove **7a,** the inner body **6** is free to snap forward being biased by the spring **15.** During its travel towards the end **1a** of the coupling, the inner body leads the valve **13** to close the inner gap **5a** of the coupling, while the chamfer **6c** provided on the head of the inner body **6** facilitates the radial expansion of the jaws **18** which thereby disengage the thread of the terminal **M.** Closing the valve **13** along with the disengagement from the terminal contributes to considerably reduce the release of fluid from the coupling side when disconnected.

Therefore, how the quick coupling according to the present invention reaches the suggested objects has been shown.

In particular, we have shown how the quick coupling according to the present invention allows to speed up the connecting operation of a female threaded terminal or terminal provided with a similar coupling profile by allowing the connection without needing screwing operations but simply by means of a substantially axial biasing movement.

This type of movement in case of many repetitions of the same (e.g. as required in a test and inspection department) is very tolerable by the operator in charge of operating the coupling and much less detrimental for the organism than the actuation by means of levers or other less ergonomic systems.

A further object achieved by the quick coupling according to the present invention is to distribute gripping forces on a wide circular crown avoiding detrimental concentrations of forces on the gripping means and on the threads of the male terminal.

A not last object achieved by the coupling according to the present invention is that of being able to ensure an optimal hold also when it is used with high working pressures, even of the order of several hundreds of atmospheres.

Furthermore, the coupling according to the present invention obtains the advantage of being easily adaptable to different types of thread of the male, terminal and this by virtue of the presence of the easily replaceable jaws.

Furthermore, a not last object achieved by the present invention is to be highly reliable also in holding threads with a wide range of dimensional tolerances.

## Claims

1. A quick coupling (1) for connecting threaded male terminals (M) or terminals having a similar connecting profile, of the type comprising a substantially cylindrical, hollow main body (5) defining a main pipe (5a) therein having a substantially axial development, an outer body (11), and gripping means (18) provided at the end (1a) of said coupling intended to accommodate said male terminal (M), and, within said main body (5), comprising automatic snapping means of the coupling (3, 5b, 6, 6b, 7, 7a, 14), adapted to automatically secure said gripping means (18) on the male terminal (M) when this is introduced into the coupling itself by a predetermined travel, and, said automatic snapping means of the coupling comprising at least one hollow cylindrical inner body (6) arranged internally and coaxially to said main body (5), axially movable and adapted to frontally match with said male terminal (M), and a slider (7) having a hollow shape, mounted coaxially to said main body and arranged between said, inner body (6) and said outer body (11) and the coupling further comprising at least one cylindrical, hollow ring nut (9, 10) coaxial to said main body (5) and sliding in the axial direction between a first releasing position in which said gripping means (18) do not mesh with the male terminal (M), and a second engaging position in which said gripping means (18) firmly hold said male terminal (M), **characterized in that** said automatic snapping means comprises one or more locking balls (3) each of said balls being placed within a seat (5b) appropriately provided on said main body (5), advantageously close to said coupling end (1 a), said locking balls being thus longitudinally and transversally constrained but radially movable and placed between said inner body (6) and said slider (7).

2. A quick coupling (1) according to the preceding claim, **characterized in that** said gripping means (18) are radially movable.

3. A quick coupling (1) according to the preceding claim, **characterized in that** said gripping means comprise a substantially annular element divided into a plurality of sections (18) or jaws, said sections or jaws (18) having at least one thread or similar connecting profile adapted to mesh with the profile of said terminal (M).

4. A quick coupling (1) according to one or more of the preceding claims, **characterized in that** said inner body (6) may axially translate and has a seat (6a) on its inner surface, which accommodates a main seal (20), which is advantageously formed by a substantially annular sealing element.

5. A quick coupling according to the preceding claim, **characterized in that** said outer ring nut (9, 10) is connected to said slider (7) by means of connecting means (19) secured to slide within a longitudinal guide (11a) provided on said outer body (11).

6. A quick coupling (1) according to one or more of the preceding claims, **characterized in that** it further comprises a slider spring (14) acting between said slider (7) and said main body (7) and adapted to bias said slider (7) towards the end (1 a) of the coupling.

7. A quick coupling (1) according to one or more of the preceding claims, **characterized in that** it further comprises an inner body spring (15) acting between said inner body (6) and said main body (5) and adapted to bias said inner body (6) towards the end (1 a) of the coupling.

8. A quick coupling (1) according to one or more preceding claims, **characterized in that** said inner body (6) has a chamfer (6c) at the edge of the head close to the opening of the end (1 a) of the coupling.

9. A quick coupling (1) according to one or more of the preceding claims, **characterized in that** it further comprises, within said main pipe (5a) and in a substantially axial position, a valve body (13) comprising a cylindrical body (13a) having a substantially longitudinal development, which is connected at a first end thereof to said inner body (6) and at the other end to a fluid on-off body (13b) adapted to close said main pipe (5a).

## Patentansprüche

1. Schnellkupplung (1) zum Verbinden von Gewindesteckanschlussstücken (M) oder Anschlussstücken mit einem ähnlichen Verbindungsprofil von dem Typ, der einen im Wesentlichen zylindrischen, hohlen Hauptkörper (5) umfasst, der eine Hauptröhre (5a) darin mit einer im Wesentlichen axialen Ausbildung definiert, einem Außenkörper (11) und Greifmitteln (18), die an dem Ende (1a) der Kupplung vorgesehen sind und das Steckanschlussstück (M) aufnehmen sollen, und, innerhalb des Hauptkörpers (5), mit einem automatischen Schnappmittel der Kupplung (3, 5b, 6, 6b, 7, 7a, 14), das ausgebildet ist, um die Greifmittel (18) automatisch an dem Steckanschlussstück (M) zu befestigen, wenn dieses in die Kupplung selbst einen vorbestimmten Weg eingeführt ist, und das automatische Schnappmittel der Kupplung zumindest einen hohlen zylindrischen Innenkörper (6), der innerhalb von und koaxial zu dem Hauptkörper (5) angeordnet, axial beweglich und derart ausgebildet ist, dass er frontal zu dem Steckanschlussstück (M) passt, und einen Schieber (7) umfasst, der eine hohle Form aufweist, koaxial zu dem Hauptkörper montiert und zwischen dem Innenkörper (6) und dem Außenkörper (11) angeordnet ist, und die Kupplung ferner zumindest eine zylindrische, hohle Ringmutter (9, 10) umfasst, die koaxial zu dem Hauptkörper (5) ist und in der axialen Richtung zwischen einer ersten Lösestellung, in der das Greifmittel (18) nicht mit dem Steckanschlussstück (M) in Eingriff steht, und einer zweiten Eingriffsstellung, in der die Greifmittel (18) das Steckanschlussstück (M) festhalten, gleitet,
**dadurch gekennzeichnet, dass**
das automatische Schnappmittel eine oder mehrere Arretierkugeln (3) umfasst, wobei jede der Kugeln in einem Sitz (5b) angeordnet ist, der an dem Hauptkörper (5) vorteilhafterweise nahe bei dem Kupplungsende (1a) geeignet vorgesehen ist, wobei die Arretierkugeln somit in Längsrichtung und in Querrichtung eingeschränkt aber radial beweglich und zwischen dem Innenkörper (6) und dem Schieber (7) angeordnet sind.

2. Schnellkupplung (1) nach dem vorhergehenden Anspruch,
**dadurch gekennzeichnet, dass**
die Greifmittel (18) radial beweglich sind.

3. Schnellkupplung (1) nach dem vorhergehenden Anspruch,
**dadurch gekennzeichnet, dass**
die Greifmittel ein im Wesentlichen ringförmiges Element umfassen, das in eine Vielzahl von Sektionen (18) oder Backen unterteilt ist, wobei die Sektionen oder Backen (18) zumindest ein Gewinde oder ein ähnliches Verbindungsprofil aufweisen, das ausgebildet ist, um mit dem Profil des Anschlussstücks (M) in Eingriff zu stehen.

4. Schnellkupplung (1) nach einem oder mehreren der vorhergehenden Ansprüche,
**dadurch gekennzeichnet, dass**
der Innenkörper (6) sich axial verschieben kann und einen Sitz (6a) an seiner Innenfläche aufweist, der eine Hauptdichtung (20) aufnimmt, die vorteilhaft durch ein im Wesentlichen ringförmiges Dichtungselement gebildet ist.

5. Schnellkupplung nach dem vorhergehenden Anspruch,
**dadurch gekennzeichnet, dass**
die äußere Ringmutter (9, 10) mit dem Schieber (7) mittels Verbindungsmitteln (19) verbunden ist, die an dem Schieber innerhalb einer Längsführung (11a) befestigt sind, die an dem Außenkörper (11) vorgesehen ist.

6. Schnellkupplung (1) nach einem oder mehreren der vorhergehenden Ansprüche,
**dadurch gekennzeichnet, dass**
sie ferner eine Schieberfeder (14) umfasst, die zwischen dem Schieber (7) und dem Hauptkörper (7) wirkt und ausgebildet ist, um den Schieber (7) in Richtung des Endes (1a) der Kupplung vorzuspannen.

7. Schnellkupplung (1) nach einem oder mehreren der vorhergehenden Ansprüche,
**dadurch gekennzeichnet, dass**
sie ferner eine Innenkörperfeder (15) umfasst, die zwischen dem Innenkörper (6) und dem Hauptkörper (5) wirkt und ausgebildet ist, um den Innenkörper (6) in Richtung des Endes (1a) der Kupplung vorzuspannen.

8. Schnellkupplung (1) nach einem oder mehreren vorhergehenden Ansprüchen,
**dadurch gekennzeichnet, dass**
der Innenkörper (6) eine Fase (6c) am Rand des Kopfes nahe bei der Öffnung des Endes (1a) der Kupplung aufweist.

9. Schnellkupplung (1) nach einem oder mehreren der vorhergehenden Ansprüche,
**dadurch gekennzeichnet, dass**
sie ferner innerhalb der Hauptröhre (5a) und in einer im Wesentlichen axialen Stellung einen Ventilkörper (13) umfasst, der einen zylindrischen Körper (13a) mit einer im Wesentlichen longitudinalen Ausbildung umfasst, der an einem ersten Ende davon mit dem Innenkörper (6) und an dem anderen Ende mit einem Fluid-Ein-Aus-Körper (13b) verbunden ist, der ausgebildet ist, um die Hauptröhre (5a) zu verschließen.

## Revendications

1. Couplage rapide (1) pour connecter des bornes mâles filetées (M) ou des bornes dotées d'un profil de connexion similaire, du type comprenant un corps principal creux sensiblement cylindrique (5) définissant un tuyau principal (5a) comportant un développement sensiblement axial à l'intérieur de celui-ci, un corps extérieur (11), et un moyen de préhension (18) disposé à l'extrémité (1a) dudit couplage destiné à recevoir ladite borne mâle (M), et, à l'intérieur dudit corps principal (5), comprenant un moyen d'encliquetage automatique du couplage (3, 5b, 6, 6b, 7, 7a, 14), apte à fixer automatiquement ledit moyen de préhension (18) sur la borne mâle (M) lorsque celle-ci est introduite dans le couplage proprement dit d'un déplacement prédéterminé, et ledit moyen d'encliquetage automatique du couplage comprenant au moins un corps intérieur cylindrique creux (6) agencé à l'intérieur et de manière coaxiale par rapport au dit corps principal (5), déplaçable axialement et apte à correspondre frontalement avec ladite borne mâle (M), et une glissière (7) ayant une forme creuse, montée de manière coaxiale sur ledit corps principal et agencée entre ledit corps intérieur (6) et ledit corps extérieur (11), et le couplage comprenant en outre au moins un écrou d'anneau creux cylindrique (9, 10) coaxial par rapport au dit corps principal (5) et coulissant dans la direction axiale entre une première position de libération à laquelle ledit moyen de préhension (18) ne s'engrène pas avec la borne mâle (M), et une deuxième position de mise en prise à laquelle ledit moyen de préhension (18) maintient fermement ladite borne mâle (M), **caractérisé en ce que** ledit moyen d'encliquetage automatique comprend une ou plusieurs billes de verrouillage (3), chacune desdites billes étant placée à l'intérieur d'un siège (5b) disposé de manière appropriée sur ledit corps principal (5), de manière avantageuse à proximité de ladite extrémité de couplage (1a), lesdites billes de verrouillage étant ainsi contraintes longitudinalement et transversalement mais mobiles radialement et placées entre ledit corps intérieur (6) et ladite glissière (7).

2. Couplage rapide (1) selon la revendication précédente, **caractérisé en ce que** ledit moyen de préhension (18) est mobile radialement.

3. Couplage rapide (1) selon la revendication précédente, **caractérisé en ce que** ledit moyen de préhension comprend un élément sensiblement annulaire divisé en une pluralité de sections (18) ou mâchoires, lesdites sections ou mâchoires (18) ayant au moins un filetage ou un profil de connexion similaire apte à s'engrener avec le profil de ladite borne (M).

4. Couplage rapide (1) selon une ou plusieurs des revendications précédentes, **caractérisé en ce que** ledit corps intérieur (6) peut subir une translation axiale et comporte un siège (6a) sur sa surface intérieure, qui reçoit un joint principal (20), qui est constitué de manière avantageuse d'un élément d'étanchéité sensiblement annulaire.

5. Couplage rapide selon la revendication précédente, **caractérisé en ce que** ledit écrou d'anneau extérieur (9, 10) est connecté à ladite glissière (7) par le biais d'un moyen de connexion (19) fixé pour coulisser à l'intérieur d'un guide longitudinal (11a) disposé sur ledit corps extérieur (11).

6. Couplage rapide (1) selon une ou plusieurs des revendications précédentes, **caractérisé en ce qu'**il comprend en outre un ressort de glissière (14) agissant entre ladite glissière (7) et ledit corps principal (7) et apte à contraindre ladite glissière (7) vers l'extrémité (1a) du couplage.

7. Couplage rapide (1) selon une ou plusieurs des revendications précédentes, **caractérisé en ce qu'**il comprend en outre un ressort de corps intérieur (15) agissant entre ledit corps intérieur (6) et ledit corps principal (5) et apte à contraindre ledit corps intérieur (6) vers l'extrémité (1a) du couplage.

8. Couplage rapide (1) selon une ou plusieurs des revendications précédentes, **caractérisé en ce que** ledit corps intérieur (6) a un biseau (6c) au bord de la tête à proximité de l'ouverture de l'extrémité (1a) du couplage.

9. Couplage rapide (1) selon une ou plusieurs des revendications précédentes, **caractérisé en ce qu'**il comprend en outre, à l'intérieur dudit tuyau principal (5a) et à une position sensiblement axiale, un corps de valve (13) comprenant un corps cylindrique (13a) ayant un développement sensiblement longitudinal, qui est connecté à une première extrémité de celui-ci au dit corps intérieur (6) et à l'autre extrémité à un corps de passage/blocage de fluide (13b) apte à fermer ledit tuyau principal (5a).
